# EUROPEAN PATENT SPECIFICATION

(11) **EP 0 456 394 B1**
(45) Date of publication and mention of the grant of the patent: **02.08.1995**
(21) Application number: 91303840.2
(22) Date of filing: 26.04.1991
(51) Int. Cl.: G09G 1/16, G06T 1/00

(54) **Video memory array having random and serial ports**
Videospeichermatrix mit einer Direktzugriffsanschlussstelle und einer seriellen Anschlussstelle
Réseau de mémoire vidéo ayant une porte à accès aléatoire et une porte sérielle

(30) Priority: 07.05.1990 US 519973
(43) Date of publication of application: 13.11.1991
(73) Proprietor: International Business Machines Corporation, Armonk, N.Y. 10504 (US)
(72) Inventor: Kokoszka, Daryl John, Austin, Texas 78731 (US); Larky, Steven Philip, Austin, Texas 78750 (US)
(74) Representative: Bailey, Geoffrey Alan

(56) References cited:
- EP-A- 0 186 139
- US-A- 3 996 559
- IEEE MICRO; vol. 8, no. 1, 1 February 1988, New York, US, pages 8-27; JEAN-DANIEL NICOUD: "Video rams: Structure and applications"

## Description

The present invention relates to a video memory array having random and serial ports.

Memory arrays such as video random access memories (VRAMs) are routinely used in frame buffers to store in digital format data representing images which are to be visually depicted on, for example, a raster scan video display, a liquid crystal display, or a plasma display screen. The VRAMs in the frame buffer provide graphics data by reading through one port in synchronism with the raster scan of the display. The VRAM data is read or written through a second port by the graphics processor in the course of manipulating the pattern or colour data used to create the images on the screen. A conventional VRAM uses a random access port for reading and writing communications with the processor and a serial access port for reading by the video raster scan circuitry (as shown, for instance, in I.E.E.E. Micro, vol. 8, no. 1, February 1988, New York; Jean-Daniel Nicoud: 'Video RAMs: Structures and applications').

The graphics rasterization processor which communicates through the random access port of the VRAM reads, processes, and writes frame buffer data in the course of generating the pattern subsequently displayed through a reading of the serial port. An advanced graphics rasterization processor will generate lines and triangles, as well as moving blocks of data from one area of the frame buffer to another. Pattern processing efficiency is largely determined by the speed of the access cycles, the speed of the graphics rasterization processor, and the number of data bits accessed from the frame buffer in a single address cycle.

An additional and less appreciated factor affecting pattern processing efficiency involves the shape of the pattern of pixels represented by the data accessed during one cycle. An access of a conventional VRAM through the random access port provides frame buffer data for a row of pixels, for example a row of four successive pixels. This occurs because the serial port requires row oriented data and thereby defines a row/column architecture within the conventional VRAM. Thus, the conventional VRAM maintains the same data structure for accesses whether initiated through the random access port or the serial access port. Accessing and manipulation of pixel data in a row format is efficient when the graphic rasterization processor is manipulating pixel patterns requiring row oriented changes. When the patterns subject to change on the display require column oriented variations, row oriented communication between the VRAM and rasterization processor provides only one vertically oriented pixel update for each memory access cycle. Consequently, the VRAM convention optimizes accessing and processing of pixel data in the direction of the raster scan, horizontally, while minimizing efficiency of accessing and updating in the opposite direction, vertically.

Vertical rasterization inefficiency becomes acute and undesirable when the prevailing variations in the graphics patterns are vertically directed. Even triangles, which are rendered by multiple horizontal lines, exhibit low dynamic efficiency. The asymmetry of the rasterization will also produce undesirable visual effects for some dynamic pattern variations.

High cost graphics systems mitigate the vertical direction inefficiency by reading out and storing in cache memory multiple scan lines from the frame buffer. Thereby, two or more rows of pixel data are simultaneously available to the graphics rasterization processor. However, pin count limitations on integrated circuit VRAMs in conjunction with the above noted architectural norm of matching the random access port to the serial access port continue to constrain the graphics processing efficiency for vertical patterns in cost competitive graphics systems. Consequently, the present invention recognises and meets the need for a VRAM architecture which provides a row oriented raster output through the serial port and multiple row oriented data through the random access port.

Accordingly the present invention provides a video random access memory (VRAM) for use with a pixel based video display configured as a plurality of rows and a plurality of columns of pixels, comprising: a memory array configured as a plurality of rows and a plurality of columns of data items; a random access data port; a serial access data port; means for accessing data representing a first plurality of pixels through the serial access port, the first plurality corresponding to pixels from a single display row in the pixel based display system; and means for accessing data representing a second plurality of pixels through the random access port, the second plurality corresponding to pixels from more than one display row in the pixel based display system.

The invention also provides a graphics adapter comprising: a VRAM as described above; logic means for writing pixel data to the VRAM random access data port; and logic means for reading pixel data from the VRAM serial access data port and transmitting the pixels to a video display.

The invention further provides a video display system comprising a VRAM as described above; logic means for writing pixel data to the VRAM random access data port; a raster scanned video display; and logic means for reading pixel data from the VRAM serial access data port and displaying the pixels on the video display.

The present invention provides an effective and cost efficient frame buffer VRAM design wherein data representing multiple rows of pixels is simultaneously accessed by the graphic rasterization processor through the random access port while retaining the conventional row format pixel data output at the serial port of the VRAM. The preferred VRAM architecture provides at the random access port data for a square pattern of pixels.

As preferably implemented, the VRAM architecture provides an array of memory cells partitioned into groups to be responsive to a common row select line, to be responsive in pairs to two column select lines, and to have the serial format output provided through shift registers. Column related pixel data is stored in common rows for random access port concurrence and is selectively serialization in shift registers for the serial port of the VRAM.

In order that the invention may be fully understood a preferred embodiment thereof will now be described, by fully of example only, with reference to the accompanying drawings in which:
Fig. 1 is a schematic representation of a pixel organization on a raster scan video display;
Fig. 2 is a schematic representing a square grouping of pixels on a screen;
Fig. 3 is a functional schematic of cells within a memory array referenced to the screen pixels in Fig. 2 and operable to provide appropriate random access port and serial access port data;
Fig. 4 schematically illustrates the architecture of a 256K x 8 VRAM configured according to the invention;
Fig. 5 is a schematic diagram relating frame buffer data to serial port shift register data; and
Fig. 6 is a schematic block diagram illustrating the use of VRAMs configured according to the present invention in a frame buffer application.

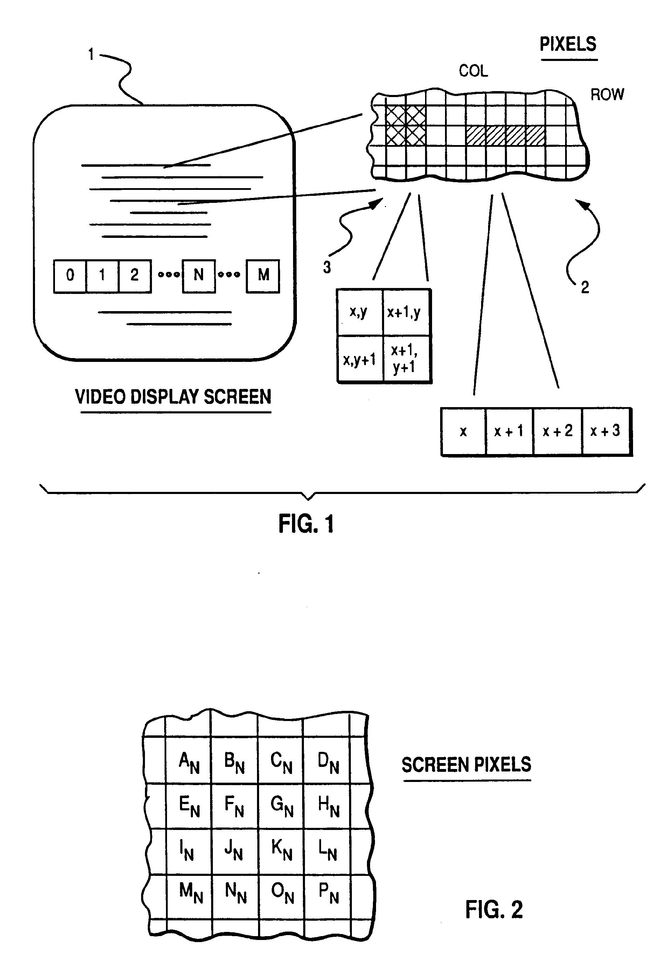

Refer now to Fig. 1 which functionally establishes the context within which the features of present invention become meaningful. A raster scan video display 1, or functionally similar liquid crystal or plasma display, visually depicts a graphic pattern generated with a computer graphics processor and stored as digital data in a frame buffer referenced to the individual screen pixel positions. The digital format data in the frame buffer is scanned and converted to analog video form in synchronism with the raster scan of the video display using a serial output port of the frame buffer. Changes to the data and associated patterns as stored in the frame buffer are accomplished through the random access port of the frame buffer. The random access port is conventionally configured to allow the rasterization processor which generates the pattern primitives, e.g. lines, blocks and triangles, to selectively read and write the addresses in the frame buffer. Since contemporary rasterization processors communicate in blocks of data extending for 32 bits, and the colour data for individual pixels is conventionally composed of 8 bits, the standard interface between the rasterization processor and the frame buffer communicates the data for four pixels simultaneously, though 5 and 8 pixel interfaces are not uncommon. For purposes of describing the present embodiment, a four pixel interface is presumed.

Raster scan applications require that the frame buffer data provided at the serial port represent successive pixels in a single row of the video display, such as the four pixels X to X+3 depicted by shading at 2 in Fig. 1. This convention of reading pixel data from the frame buffer in row blocks has defined a norm for VRAM architectures in which the input and output ports address similar blocks of pixel data.

The above described convention for VRAM architectures is ideal for the raster scan function, and for random access port communication with the rasterization processor when the patterns subject to manipulation change in the horizontal or row directions. As noted hereinbefore, such conventional VRAM data formats for the random access port become relatively inefficient when the pixel pattern changes project vertically, in that a single frame buffer access cycle addresses only a single row of pixel data, in contrast to four columns of pixel data, for manipulation. The VRAM architecture of the present embodiment retains the row format of the data accessed through the serial port while providing at random access port pixel data of multiple row block format, such as the 2 x 2 block at 3 in Fig. 1. Therefore a single frame buffer access cycle allows the rasterization processor to simultaneously read or write the pixel data for multiple rows of pixels.

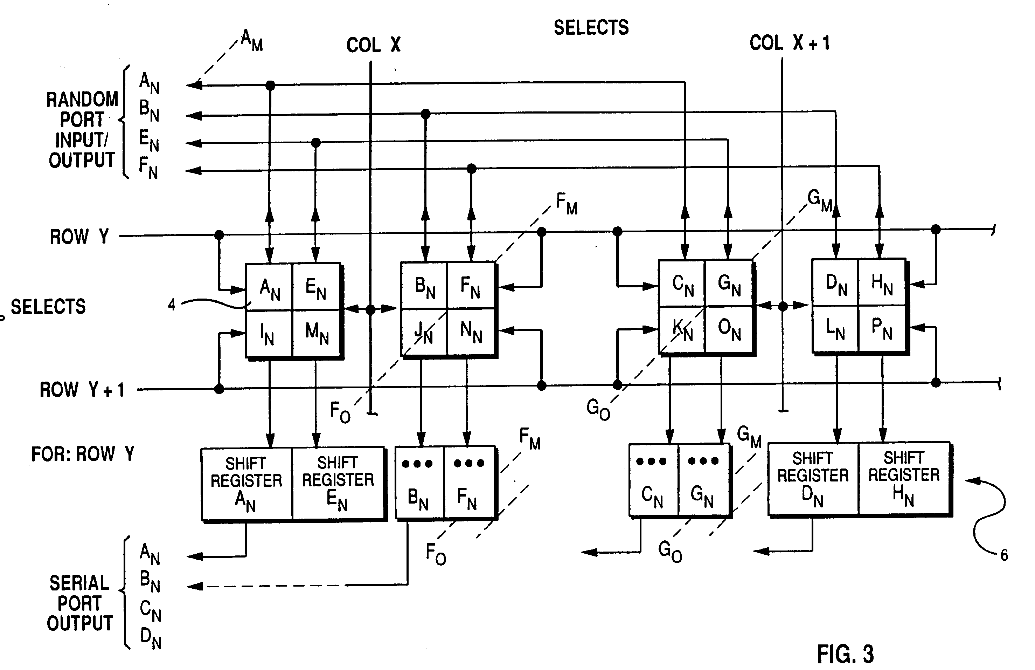

Fig. 2 schematically depicts a 4 x 4 block of pixels, the Nth block in a succession of M blocks projecting horizontally across screen 1 in Fig. 1. The block is composed of individually identified pixels A_{N}-P_{N}. The fundamental architecture of the present embodiment will be described in the context of the schematic depiction in Fig. 3, referenced to the pixel pattern in Fig. 2. Note that the objective is to provide at the serial port a succession of data representing four pixels such as A_{N}, B_{N}, C_{N} and D_{N} while providing random access port addressing of pixel data in 2 x 2 blocks such as A_{N}, B_{N}, E_{N} and F_{N}.

Fig. 3 depicts an array of individual memory cells within which binary data representing a pixel position (A_{N}-P_{N}) is stored and accessible by the row and column select lines of the VRAM. The array illustrated in Fig. 3 shows sixteen cells, two row select lines, Y and Y+1, and a pair of column select lines, X and X+1. Row select line Y addresses the multiple memory array cells storing pixel data for pixels A_{N}, E_{N}, B_{N}, F_{N}, C_{N}, G_{N}, D_{N}, and H_{N}. Enablement of a column select, such as X+1, addresses the multiple memory cells storing data for pixels C_{N}, G_{N}, K_{N}, O_{N}, D_{N}, H_{N}, L_{N}, and P_{N}. Coincidence of row and column select addressing is required to read or write a cell.

The concurrence of row and column selects for a serial port read cycle causes the pixel data in the selected cells to be transferred to the associated register in the string of shift registers 6. Shift registers 6 in Fig. 3 are shown to be storing memory cell data for an enablement of the row Y select in conjunction with column X and X+1 selects. Shift registers 6 are interconnected to provide at the serial port the appropriate block of pixel data, the succession A_{N}-D_{N}.

In contrast to the single row format of the pixel data provided at the serial port, random port addressing of column X and row Y in the array provides read/write access to the data representing two rows and two columns of pixels, namely, A_{N}, B_{N}, E_{N} and F_{N}. Thereby, the architecture of the. VRAM as depicted in Fig. 3 retains the single row format required for the serial port while providing a multiple row format at the random access port of the VRAM.

The simplified schematic in Fig. 3 recognizes that a complete VRAM is composed of a multiplicity of similar memory array cells in numerical correspondence to the O-M blocks of pixels shown in screen 1 of Fig. 1. The array in Fig. 3 would therefore be replicated M+1 times in depth to provide the frame buffer equivalent for storing pixel data for the M blocks in Fig. 1. The actual frame buffer would be even greater in size, given the regions in screen 1 that have yet to be allocated memory space. One should also recognize that the schematic representation of the architecture as appears in Fig. 3 is not limited to a single bit of memory for each pixel position. The actual data representing each pixel as stored in the generically represented cell 4 can be composed of multiple pixel planes, for example 4 or 8, which are addressed in parallel with each accessing and shifting operation.

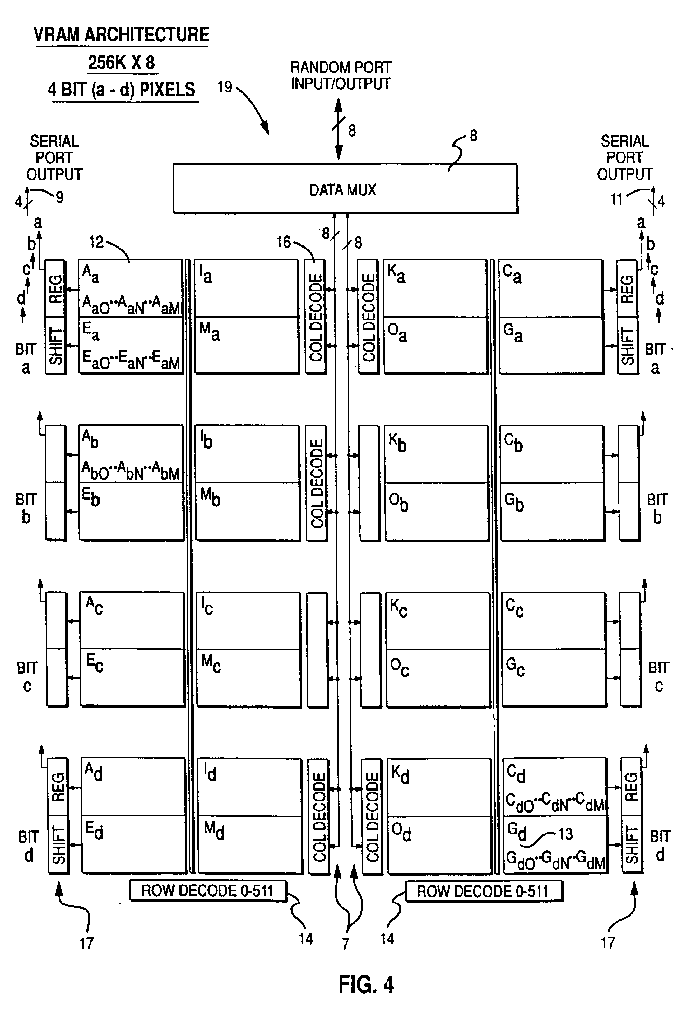

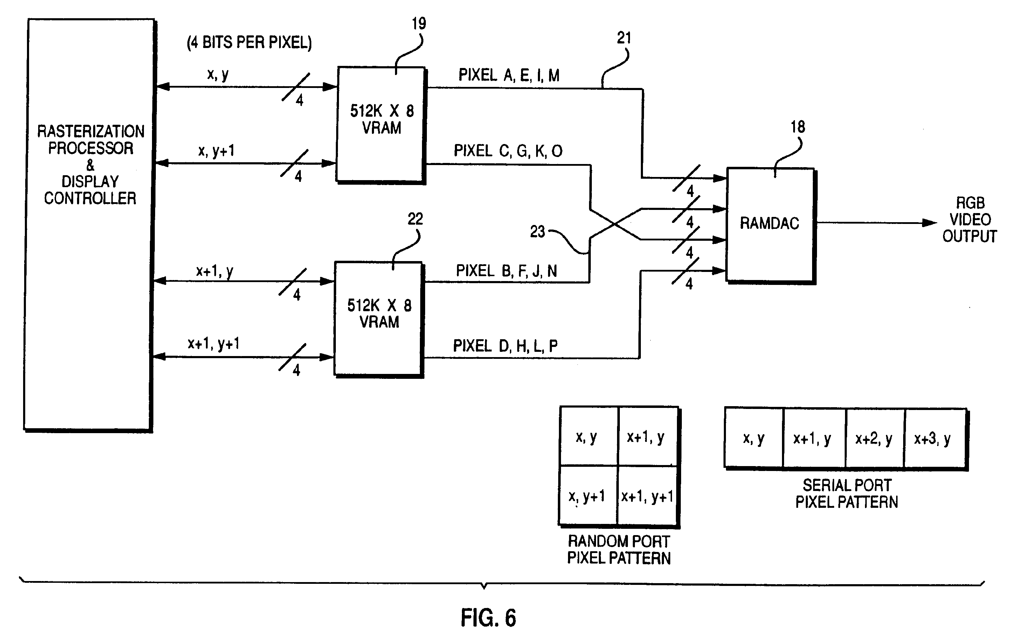

The basic principles of the architecture described with reference to Fig. 3 are implemented in the configuration of a representative 256K x 8 VRAM 19 as depicted in Fig. 4. The VRAM so illustrated is based on a 4 bit per pixel (16 colour) data format, simplified to focus the consideration on the important features of the underlying architecture. Extension of the architecture to an 8 bit per pixel structure is relatively trivial for one of skill in the art. The array depicted in Fig. 4 includes two eight line wide random access buses 7 connected through data mux block 8 to the random access port of the VRAM. The serial port outputs are provided via two four line wide buses 9 and 11. The serial port at the left in Fig. 4 provides the A, E, I, and M position data, while the serial port at the right of the figure provides the C, G, K and O position data. Data representing pixel positions B, F, J, N and successive column D, H, L and P pixel information is provided by a matching second VRAM as generally depicted in the composite system block diagram of Fig. 6. The four lines of the serial port output buses corresponding to the 4 bits per pixel and are individually identified herein by subscripts a, b, c, and d.

The VRAM is partitioned into subarrays individually identified by the pixel position data stored therein. For example, Aₐ data subarray 12 stores the first bit ("a" bit), of the 4 bit per pixel data, for each of the A positions of the M blocks of pixels represented in Figs 1 and 2. Similarly G_{d} data subarray 13 stores the fourth bit ("d" bit) information for the G pixels in the M blocks of pixels across the video display screen.

The depiction in Fig. 4 does not specifically show address lines. Row decoding is performed by 512 line row decodes 14, which decodes are situated at the bases of their respectively related right and left banks of the VRAM. The column decodes are located in columns by respective banks along the centre of the array and operatively select from within the four subarrays immediately adjacent thereto. For example, column decode 16 enables corresponding column lines in all four subarrays Aₐ, Eₐ, Iₐ and Mₐ.

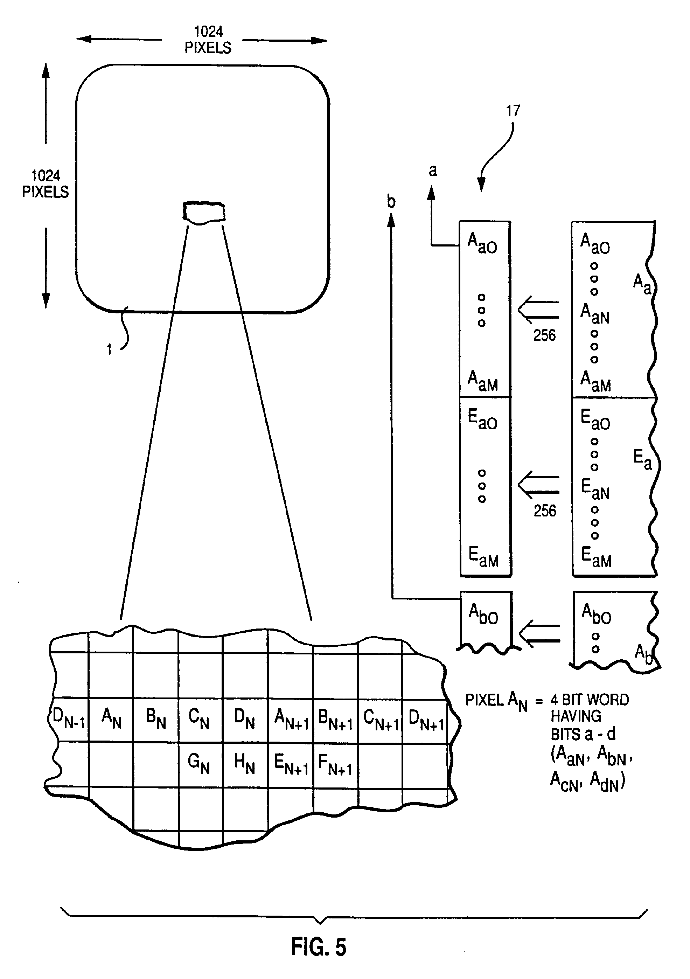

The banks of shift registers 17 at the left and right peripheries of the subarrays receive pixel data in parallel from their related subarrays. The arrangement is particularized in Fig. 5. With reference to Fig. 5, note that each shift register in bank 17 receives 512 bits of data from the adjacent subarrays in the format consistent with the layout of the video display screen. For example, consider the generation of the first bit of the four bit per pixel word, the "a" bit, for a video display screen composed of 1024 x 1024 pixels. The tandem connected shift register 17 receive 512 bits of information from the A and E subarrays upon a row/column select, recognizing that a column select simultaneously addresses both the A and the E subarrays. A similar occurrence takes place in the shift registers adjacent the C and G subarrays (Fig. 4) as well as the corresponding B, F, D and H subarrays in the other 256K x 8 VRAM 22 in Fig. 6. Consequently, at the conclusion of a serial output port read cycle, the shift registers 17 would be fully loaded with all four bits for two rows of pixel positions on the video display 1.

RAMDAC 18 in Fig. 6 then sequences, in conventional manner, through the four inputs to receive the four bit per pixel words representing successive pixels A, B, C and D on the video display. For example, data for the A pixel, bits Aₐ₀, A_{b0}, A_{c0} and A_{d0}, at the left of screen 1 is provided as a four bit word from VRAM 19 on four line bus 21. RAMDAC 18 next reads the data for the B pixel from VRAM 22 on four line bus 23, and in succession thereafter receives the pixel C and pixel D information as four bit words. Thereafter, the serial output registers in VRAMs 19 and 22 are shifted by one position and the RAMDAC sequencing repeated for the data representing successive positions (Aₐ₁, A_{b1}, A_{c1}, A_{d1}, Bₐ₁, B_{b1}...) on screen 1. This operation is repeated for successive rows until all the screen pixel information is shifted out for the scan synchronized display.

Random accessing of the VRAM depicted in Fig. 4 is accomplished in conventional manner by row and column select operations. For example, the eight line wide random access bus at the left in Fig. 4 will convey the four bits (a-d) for the A and E (or the I and M) pixels to data multiplexor 8 at the same time that VRAM 22 in Fig. 6 accomplishes the same access for the B and F (or the J and N) pixel positions. Such data signals on the random bus are then conveyed through multiplexor 8 to the random access port of the VRAM. Data multiplexor 8 decouples the two halves of the random access bus 7 to reduce the loading applied to the memory cells during the read cycle.

The VRAM architecture is amenable to being operated in conventional manner by including a mode control and appropriate subarray control elements in the address decodes. Thus, the VRAM architecture provides a flexible design capable of either single or multiple row reading of pixel data through the random access port of the VRAM.

To summarise, in at least a preferred embodiment the present invention thus defines a frame buffer VRAM architecture which provides simultaneously access to pixel data in different rows of pixels through the random access port while retaining the conventional serial format pixel data output at the serial output port. When a VRAM with such architecture is used in a frame buffer of a graphics display system, the accessing of multiple rows of pixel data accelerates the manipulation rate of patterns which project vertically on a horizontally scanned video display. The improvement in frame buffer accessing efficiency for vertical patterns is acquired at a relatively nominal cost in terms of VRAM control lines and functional blocks.

In other words, there has been described a memory array having two independent ports, comprising: means for accessing data in the array according to a first order through a random access port; means for accessing data in the array according to a second order through a serial access port; and means for directly relating data of first order to data of second order by selection of access port. Both of the accessing means can operate in single access cycle. As described, data of first order relates to a first succession of pixels in a first row of display means and the data of second order relates to some of the first succession of pixels and some of a second succession of pixels in a second row of the display means, the first and second rows being directly adjacent as generated in the display means. In this embodiment the data of first order is a string of n bits, the data of second order is string of m bits, and the means for directly relating defines a common string of p bits, wherein p is less than both n and m. The string of n bits represents a succession of pixels in a first row of display means, the string of m bits represents a succession of pixels in a second row of the display means, and pixels having the string of n bits and having the string of m bits shard common columns in the display means. In fact, n = m = 2p, and the first row pixels represented by a succession of n/2 bits and the second row pixels represented by a succession of m/2 bits are in the same column of the display means, the succession of pixels in the first and second rows being two in count.

Though the invention has been described and illustrated by way of specific embodiments, the methods and structures should be understood to encompass the full scope of practices defined by the claims set forth hereinafter.

## Claims

1. A video random access memory (VRAM) (19, 22) for use with a pixel based video display configured as a plurality of rows and a plurality of columns of pixels, comprising:
a memory array configured as a plurality of rows and a plurality of columns of data items;
a random access data port;
a serial access data port;
means (17) for accessing data representing a first plurality of pixels through the serial access port, the first plurality corresponding to pixels from a single display row in the pixel based display system; characterized in that the VRAM further comprises
means (8, 16) for accessing data representing a second plurality of pixels through the random access port, the second plurality corresponding to pixels from more than one display row in the pixel based display system.

2. A VRAM as claimed in claim 1, wherein the second plurality of pixels comprises an even number y of pixels, being y/2 pixels from a first display row and y/2 pixels from a second display row.

3. A VRAM as claimed in claim 2, wherein the first and second rows of pixels are adjacent, and the two sets of y/2 pixels are located in corresponding columns.

4. A VRAM as claimed in any preceding claim, in which there is a one-to-one correspondence between the pixel displayed at a particular row and column on the video display, and the data item stored at that row and column address in the memory array.

5. A VRAM as claimed in claim 4, further comprising:
an address input port; and
address decoding means responsive to an address placed on the address input port and operable such that when a particular row and column are selected,
a) the first plurality of data items from the selected row are made available for access through the serial access data port; and
b) the second plurality of data items, from the selected row and from at least one other row are made available for access through the random access data port.

6. A graphics adapter comprising:
a VRAM as claimed in any preceding claim;
logic means for writing pixel data to the VRAM random access data port; and
logic means for reading pixel data from the VRAM serial access data port and transmitting the pixels to a video display.

7. A video display system comprising:
a VRAM as claimed in any of claims 1 to 5;
logic means for writing pixel data to the VRAM random access data port;
a raster scanned video display; and
logic means for reading pixel data from the VRAM serial access data port and displaying the pixels on the video display.

## Patentansprüche

1. Ein Video-RAM (VRAM) (19,22) zur Benutzung mit einer auf Bildelementen basierenden Bildschirmanzeige, die als eine Vielzahl von Reihen und eine Vielzahl von Spalten mit Bildelementen konfiguriert ist, mit:
einer Speichermatrix, die als eine Vielzahl von Reihen und eine Vielzahl von Spalten mit Datenfeldern konfiguriert ist;
einer Direktzugriffsanschlußstelle;
einer seriellen Anschlußstelle;
Mitteln (17) zum Zugriff auf Daten, die eine erste Vielzahl von Bildelementen über die serielle Anschlußstelle darstellen, wobei die erste Vielzahl Bildelementen aus einer einzelnen Anzeigenreihe in dem auf Bildelementen basierenden Anzeigesystem entspricht; und dadurch gekennzeichnet wird, daß der VRAM außerdem enthält:
Mittel (8,16) zum Zugriff auf Daten, die eine zweite Vielzahl von Bildelementen über die Direktzugriffsanschlußstelle darstellen, wobei die zweite Vielzahl Bildelementen von mehr als einer Anzeigenreihe in dem auf Bildelementen basierenden Anzeigesystem entspricht.

2. Ein VRAM wie in Anspruch 1 angemeldet, wobei die zweite Vielzahl von Bildelementen eine gerade Anzahl y von Bildelementen enthält, y/2 Bildelemente aus einer ersten Anzeigereihe und y/2 Bildelemente aus einer zweiten Anzeigereihe.

3. Ein VRAM wie in Anspruch 2 angemeldet, wobei die erste und zweite Reihe mit Bildelementen aneinandergrenzen, und sich die beiden Sätze mit y/2 Bildelementen in entsprechenden Spalten befinden.

4. Ein VRAM wie in irgendeinem vorhergehenden Anspruch angemeldet, in dem es eine Eins-zu-Eins-Übereinstimmung zwischen dem Bildelement gibt, das in einer besonderen Reihe und Spalte in der Bildschirmanzeige angezeigt wird, und dem Datenfeld, das in dieser Reihen- und Spaltenadresse in der Speichermatrix gespeichert ist.

5. Ein VRAM wie in Anspruch 4 angemeldet, der außerdem enthält:
eine Anschlußstelle für die Adreßeingabe; und
Adreßdecodiermittel, die auf eine Adresse reagieren, die in der Anschlußstelle der Adreßeingabe plaziert wurde, und betriebsfähig sind, wenn eine besondere Reihe und Spalte ausgewählt wird,
a) die erste Vielzahl von Datenfeldern aus der ausgewählten Reihe ist zum Zugriff über die serielle Anschlußstelle verfügbar; und
b) die zweite Vielzahl von Datenfeldern aus der ausgewählten Reihe und aus wenigstens einer anderen Reihe ist zum Zugriff über die Direktzugriffsanschlußstelle verfügbar.

6. Ein Graphikadapter mit:
einem VRAM wie in irgendeinem vorhergehenden Anspruch angemeldet;
Logikmitteln zum Schreiben von Bildelementdaten in die Direktzugriffsanschluß des VRAM's; und
Logikmitteln zum Lesen von Bildelementdaten aus der seriellen Anschlußstelle des VRAM's und Übertragung der Bildelemente in eine Bildschirmanzeige.

7. Ein Bildschirmanzeigesystem mit:
einem VRAM wie in irgendeinem der vorhergehenden Ansprüche 1 bis 5 angemeldet;
Logikmitteln zum Schreiben von Bildelementdaten in die Direktzugriffsanschlußtelle des VRAM's;
einer rasterabgetasteten Bildschirmanzeige; und
Logikmitteln zum Lesen von Bildelementdaten aus der seriellen Anschlußstelle des VRAM's und Anzeige der Bildelemente in der Bildschirmanzeige.

## Revendications

1. Une mémoire vidéo à accès aléatoire (VRAM) (19, 22) à utiliser avec un affichage vidéo à base d'éléments pixel configuré comme une pluralité de rangées et une pluralité de colonnes de pixels, comprenant:
- un réseau de mémoire configuré comme une pluralité de rangées et une pluralité de colonnes d'éléments de données;
- un port de données à accès aléatoire;
- un port de données à accès séquentiel;
- des moyens (17) pour accéder à des données représentant une première pluralité de pixels au travers du port d'accès séquentiel, la première pluralité correspondant aux pixels d'une seule rangée d'affichage dans le système d'affichage à base de pixels;
caractérisée en ce que la mémoire VRAM comprend en outre:
- des moyens (8, 16) pour accéder à des données représentant une seconde pluralité de pixels, au travers du port à accès aléatoire, ladite seconde pluralité correspondant à des pixels de plus d'une rangée d'affichage dans le système d'affichage à base de pixels.

2. Une mémoire VRAM selon la revendication 1 dans laquelle la seconde pluralité de pixels comprend un nombre pair y de pixels dont y/2 pixels sont d'une première rangée d'affichage et y/2 pixels sont d'une seconde rangée d'affichage.

3. Une mémoire VRAM selon la revendication 2 dans laquelle les première et seconde rangées de pixels sont adjacentes, et les deux ensembles de y/2 pixels sont situés dans des colonnes correspondantes.

4. Une mémoire VRAM selon l'une quelconque des revendications précédentes, dans laquelle il y a une correspondance de un à un entre le pixel affiché dans une rangée et une colonne particulières de l'affichage vidéo et l'élément de données emmagasiné à cette adresse de rangée et de colonne dans le réseau de mémoire.

5. Une mémoire VRAM selon la revendication 4, comprenant en outre:
- un port d'entrée d'adresse; et
- des moyens de décodage d'adresse répondant à une adresse placée sur le port d'entrée d'adresse et pouvant être activés de façon que, lorsqu'une rangée et une colonne particulières sont sélectionnées,
a) la première pluralité d'éléments de données de la rangée sélectionnée soit rendue disponible pour être accédée au travers du port de données à accès séquentiel; et que
b) la seconde pluralité d'éléments de données de la rangée sélectionnée et d'au moins une autre rangée, soit rendue disponible pour être accédée au travers du port de données à accès aléatoire.

6. Un adaptateur graphique comprenant:
- une mémoire VRAM selon l'une quelconque des revendications précédentes;
- des moyens logiques pour écrire des données de pixels au port de données à accès séquentiel de la mémoire VRAM et
- des moyens logiques pour lire des données de pixels depuis le port de données à accès séquentiel de la mémoire VRAM et pour transmettre les pixels à un affichage vidéo.

7. Un système d'affichage vidéo comprenant:
- une mémoire VRAM selon l'une quelconque des revendications 1 à 5;
- des moyens logiques pour écrire des données de pixels au port de données à accès aléatoire de la mémoire VRAM;
- un affichage vidéo balayé par trame; et
- des moyens logiques pour lire des données de pixels depuis le port de données à accès séquentiel de la mémoire VRAM et pour afficher les pixels sur l'affichage vidéo.
